(19) Europäisches Patentamt
European Patent Office
Office européen des brevets

(11) EP 2 212 362 B1

(12) # FASCICULE DE BREVET EUROPEEN

(45) Date de publication et mention de la délivrance du brevet:
**27.03.2013 Bulletin 2013/13**

(21) Numéro de dépôt: **08856894.4**

(22) Date de dépôt: **18.11.2008**

(51) Int Cl.:
***C09D 175/00*** *(2006.01)* ***C08G 18/70*** *(2006.01)*
***C08G 18/08*** *(2006.01)* ***C08G 18/32*** *(2006.01)*
***C08G 18/34*** *(2006.01)* ***C08G 18/38*** *(2006.01)*
***C08G 18/50*** *(2006.01)* ***C09D 175/04*** *(2006.01)*

(86) Numéro de dépôt international:
**PCT/FR2008/052075**

(87) Numéro de publication internationale:
**WO 2009/071793 (11.06.2009 Gazette 2009/24)**

(54) **NOUVELLES COMPOSITIONS POLYISOCYANATES HYDRODISPERSIBLES**
NEUARTIGE WASSERDISPERSIBLE POLYISOCYANAT-ZUSAMMENSETZUNGEN
NOVEL HYDRODISPERSIBLE POLYISOCYANATE COMPOSITIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.11.2007 FR 0759172**

(43) Date de publication de la demande:
**04.08.2010 Bulletin 2010/31**

(73) Titulaire: **Vencorex France**
**69800 Saint-Priest (FR)**

(72) Inventeurs:
- **BERNARD, Jean-Marie**
  **F-69440 Saint-Laurent d'Agny (FR)**
- **OLIER, Philippe**
  **F-69007 Lyon (FR)**

(74) Mandataire: **Colombet, Alain André et al**
**Cabinet Lavoix**
**62, rue de Bonnel**
**69448 Lyon Cedex 03 (FR)**

(56) Documents cités:
**WO-A-02/22703** **WO-A-97/12924**
**WO-A-2006/097318** **US-A- 5 854 332**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne de nouvelles compositions polyisocyanates hydrodispersibles, leur procédé de préparation, ainsi que leur utilisation pour la préparation de revêtements, et en particulier de peintures ou vernis.

Les domaines d'application dans lesquels interviennent des revêtements sont d'une très grande diversité et requièrent de plus en plus des compositions pour revêtement de très haute technicité, possédant d'excellentes qualités tant sur le plan de l'application du revêtement que sur les caractéristiques du produit fini.

Il est sans cesse demandé des revêtements possédant des propriétés améliorées, en particulier possédant une vitesse de séchage accrue, une plus grande résistance aux impacts et aux chocs et un comportement amélioré vis-à-vis des agressions chimiques de toutes sortes, organiques, microbiennes ou atmosphériques, ainsi qu'une résistance améliorée aux lavages sous pression, en particulier pour les substrats en matières plastiques.

Il existe par exemple, pour l'industrie automobile, une forte demande pour des compositions de revêtement présentant d'excellentes propriétés de résistance aux chocs, en particulier de résistance au gravillonnage, en particulier pour les compositions de revêtement destinées à la première monte, c'est-à-dire comme revêtement primaire de carrosserie, comme revêtement de base ou encore comme "top coat" (ou couche de finition).

Le document WO 02/22703 A1 décrit un procédé destiné à conférer à des substrats en bois ou ayant une surface en bois un revêtement présentant une résistance élevée à l'attaque des produits chimiques. L'exemple 1 de WO 02/22703 A1 dévoile le procédé de préparation d'une de ces compositions, laquelle comprend un polyisocyanate, un mélange de mono-et de diesters phosphorique de mono alkyl éther de polyéthylène glycol et de la triéthylamine.

La présente invention a pour but de fournir de nouvelles compositions polyisocyanates permettant d'obtenir des revêtements présentant des propriétés satisfaisantes d'auto-émulsification, d'homogénéité et de brillance.

La présente invention a pour but de fournir de nouvelles compositions permettant l'obtention de revêtements répondant aux problématiques d'usage, et notamment permet d'éviter les problèmes d'odeurs par exemple liés à l'utilisation d'amines de masse faible.

La présente invention concerne une composition comprenant :

- au moins un (poly)isocyanate et
- au moins un tensioactif comprenant :

  (i) au moins un acide ou un mélange d'acides, choisi parmi

  - des acides sulfoniques tel que l'acide para toluène sulfonique, l'acide dodécyle benzène sulfonique, l'acide naphtalène sulfonique, l'acide xylène sulfonique, l'acide camphorsulfonique, l'acide méthane sulfonique, l'acide dodécane sulfonique, l'acide 3 sulfo propyl acrylate, l'acide 3 sulfo propyl méthacrylate, l'acide trifluorométhane sulfonique, l'acide perfluorobutane sulfonique, l'acide sulfophtalique et l'acide perfluorooctane sulfonique ;
  - des acides sulfiniques tels que l'acide benzène sulfinique et l'acide para toluène sulfinique ;
  - des monoesters et diesters des phosphates d'alkyle tels que le dibutyl phosphate acide, le di (2-éthylhexyl) phosphate acide, le didodécylphosphate acide, le di (néodécanoyl) phosphate acide, le monobutyl phosphate acide et le monostéaryl phosphate acide ;
  - des alkyl phosphoniques acides et les monoesters des alkylphosphoniques acides tels que le méthyl phosphonique acide, l'octyl phosphonique acide, l'hexadécaméthylène phosphonique acide et le 2 chloroéthylphosphonique acide ;
  - des acides perfluoroacétiques tels que l'acide trifluoroacétique et l'acide hexafluoropropionique ;
  - du bis trifluorométhane sulfonimide ;
  - du triéthylsulfonylméthane
  - des sulfates acides tels que le dodécasulfate acide ou des éthers sulfates acides des mono alkyl éther de polyéthylène glycol, l'alkyl éther étant une chaîne hydrocarbonée de 1 à 8 atomes de carbone
  - des acides sulfamiques tels que le cyclohexylsulfamique acide, le butylsulfamique acide, le N,N-diméthylsulfamique acide
  - des mono et diester phosphates de mono alkyl éther de polyéthylène glycol,
  - des alkylène bis phosphoniques acides tels que le méthylène bisphosphonique acide ou les esters acides d'alkylène bis phosphonique
  - du naphtalène trisulfonique acide, et
  - l'acide sulfo benzoique acide, ou les anhydrides ou chlorures correspondants, et

  (ii) au moins une amine ou polyamine ou un mélange de ces amines, éventuellement hétérocyclique, ladite amine étant porteuse d'au moins une fonction oxyde d'alkylène, de préférence oxyde d'éthylène.

L'amine constituant ledit tensioactif peut être une amine hétérocyclique, ledit hétérocycle pouvant contenir au moins un autre hétéroatome. Dans le cadre de la présente invention, lorsque l'amine du tensioactif est une amine hétérocyclique, la fonction oxyde d'alkylène est de préférence portée par l'atome d'azote de la fonction amine.

L'amine susmentionnée peut contenir plusieurs fonctions oxydes d'alkylène, identiques ou différentes, et ces différentes fonctions peuvent être en blocs ou alternées.

Le terme "polyamine" désigne un composé présentant au moins 2 fonctions amines. Parmi les polyamines, on peut citer notamment les polyétheramines Elastamine® (Huntsman) ou Jeffamine® (Huntsman), et plus particulièrement les produits suivants :

- RP-409 (ou XTJ-582) de poids moléculaire d'environ 400 et RP-2009 (ou XTJ-578) de poids moléculaire d'environ 2 000, dont le squelette de base est le suivant :

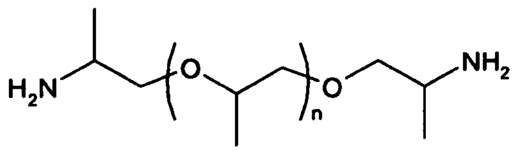

- RTP-1006 (ou XTJ-542) et RTP-1407 (ou XTJ-559) de squelette de base poly(tétraméthylène éther)glycol (PTMEG) comme suit :

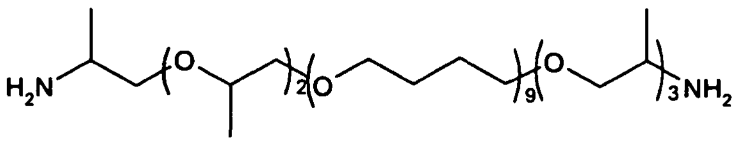

- RE-600 (ou XTJ-500), RE-900 (XTJ-501) ou RE-2000 (ou XTJ-502) de squelette de base PEG, comme suit :

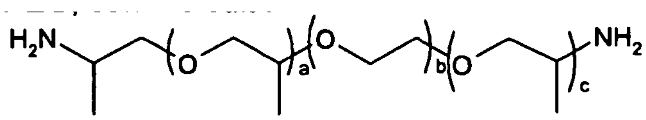

- RTP-2007, RTP-2005, RTP-1006 et RTP-1407 de formule suivante :

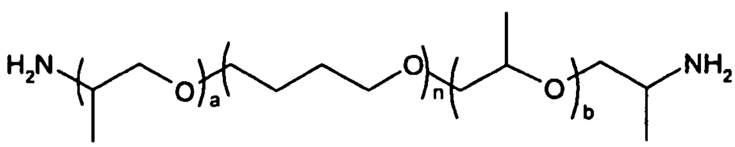

| Désignation | Poids moléculaire | n | a | b | moles d'oxyde de propylène (PO) |
|---|---|---|---|---|---|
| RTP-2007 (ou XTJ-533) | 2000 | 9 | 12 | 11 | 24 |
| RTP-2005 (ou XTJ-536) | 2000 | 14 | 9 | 8 | 18 |
| RTP-1006 (ou XTJ-542) | 1 000 | 9 | 3 | 2 | 6 |
| RTP-1407 (ou XTJ-559) | 1350 | 14 | 3 | 2 | 6 |

- HT-1700 (ou XTJ-548) de formule suivante :

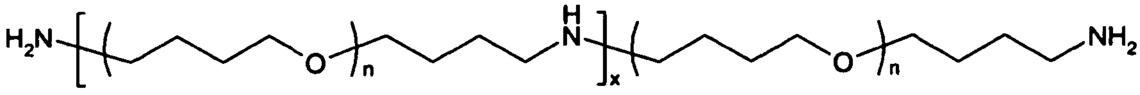

où n = 13 et x = 0-2

- HE-150 (ou XTJ-504) :

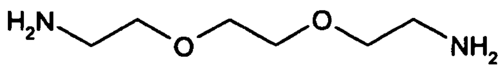

- HE-180 (ou XTJ-590) :

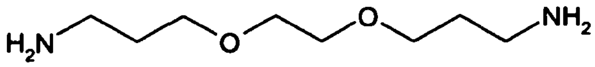

- HE-1000 (type PEG) :

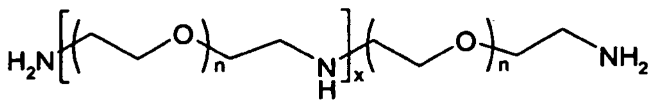

où n = 13 et x = 0-1

On peut également citer les composés de la série HT :

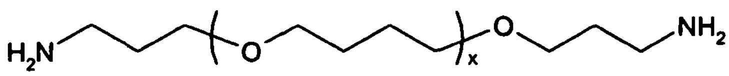

ainsi que les composés de la série HP-2000 (bis(aminopropyl) PEA) :

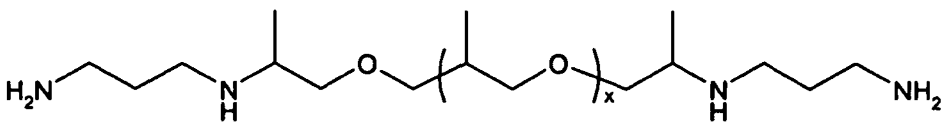

Parmi les polyamines, on peut également citer le composé XTJ-616 (amine tétrafonctionnelle à base d'oxyde de propylène) de poids moléculaire d'environ 600 :

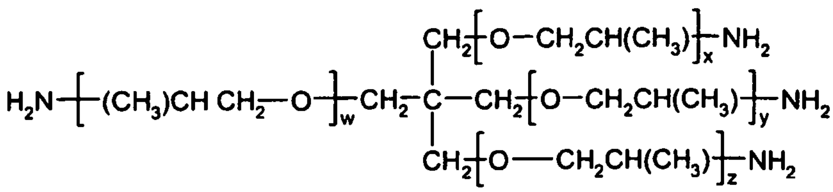

ou encore les composés XTJ-523 ou XTJ-527 (squelette oxyde de butylène) :

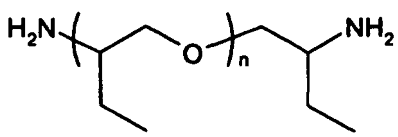

La composition de (poly)isocyanates comprise dans la composition selon la présente invention consiste en tout isocyanate et polyisocyanate, seul ou en mélange avec un ou plusieurs autres isocyanates et/ou polyisocyanates. Le terme "(poly)isocyanate" doit être compris ici comme regroupant les termes "isocyanate" et "polyisocyanate".

Avantageusement, le tensioactif est choisi de manière qu'il ne comporte pas ou peu de fonction réactive avec le (poly)isocyanate. Autrement dit, le tensioactif est présent dans la composition solvantée sous forme essentiellement

libre (par opposition à une forme liée par l'intermédiaire d'une liaison chimique avec le (poly)isocyanate).

L'expression "forme essentiellement libre" signifie que moins de 50 %, avantageusement moins de 20 %, de préférence moins de 10 % en masse de l'agent tensioactif est sous forme liée.

Toutefois, les compositions sous forme de solution dans lesquelles le tensioactif est totalement lié, de manière covalente, aux (poly)isocyanates, sont également comprises dans le champ de la présente invention.

Les compositions selon l'invention sont hydrodispersibles et seront également nommées par la suite « compositions polyisocyanates hydrodispersibles ».

Le caractère hydrodispersible de ces compositions polyisocyanates est vérifié en prenant 1g de mélange de composition polyisocyanate et en dispersant dans 10 ml d'eau. Après agitation quelques minutes, on observe une dispersion laiteuse de composition polyisocyanate dans l'eau.

Des tests complémentaires sont effectués en préparant une formulation de vernis constituée du mélange de polyisocyanate hydrodispersible avec un polyol ou polyuréthane hydrodispersable (PUD) en présence éventuelle d'un solvant. La formulation est alors appliquée sur une plaque de verre et laissée sécher à température et humidité contrôlée. L'obtention d'un film brillant est révélatrice d'une bonne dispersion des divers constituants du vernis dans l'eau.

Selon un mode de réalisation particulier, la présente invention concerne une composition comprenant :

- au moins un (poly)isocyanate et
- au moins un tensioactif comprenant au moins un acide ou un mélange d'acides selon l'invention, et au moins une amine porteuse d'une chaîne polyoxyalkylène, de préférence polyoxyéthylène.

Selon un autre mode de réalisation, le tensioactif peut être sous forme de sel. La présente invention concerne également une composition comprenant :

- au moins un (poly)isocyanate, et
- au moins un tensioactif tel que défini ci-dessus comprenant au moins un acide porteur d'au moins un groupe -X-H, X étant choisi parmi les éléments des colonnes de l'oxygène, de l'azote, du carbone.

La présente invention concerne également une composition comprenant :

- au moins un (poly)isocyanate, et
- au moins un tensioactif tel que défini ci-dessus comprenant au moins un acide dont le $pK_a$ dans l'eau est inférieur à 5, de préférence inférieur à 4, et avantageusement inférieur à 3.

La présente invention concerne également une composition telle que définie ci-dessus, dans laquelle le ratio molaire entre la somme des fonctions acides et la somme des fonctions amines est compris de 0,5 à 2,5, avantageusement compris de 0,7 à 1,5, et de préférence de 1 à 1,2.

Dans le cadre de la présente invention, il n'est pas obligatoire de neutraliser toutes les fonctions acides par les amines.

Un tel ratio permet de modifier la nature du système tensioactif en le rendant plus ou moins hydrophile selon le taux de fonctions ioniques. Il permet également de limiter les réactions secondaires pouvant avoir lieu entre les groupes isocyanates et les fonctions acides lorsque le ratio est supérieur à 1.

Selon un mode de réalisation particulier, la composition selon l'invention peut comprendre au moins une amine telle que définie ci-dessus, c'est-à-dire une amine porteuse d'au moins une fonction oxyde d'alkylène, de préférence oxyde d'éthylène, et une autre amine qui peut être une amine primaire, et/ou secondaire et/ou tertiaire ne contenant pas de fragment oxyde d'alkylène.

Selon un autre mode de réalisation avantageux, l'acide ou au moins un acide du mélange d'acides de la composition telle que définie ci-dessus répond à la formule (I-3) suivante :

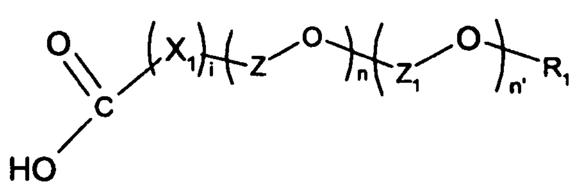

(I-3)

dans laquelle :

- i représente 0 ou 1 ;

- n et n' représentent, indépendamment l'un de l'autre, zéro ou un entier compris de 1 à 30 ;
- Z et $Z_1$ représentent, indépendamment l'un de l'autre, un radical bivalent alkylène, linéaire ou ramifié constitué de 2 à 10, de préférence de 2 à 4 atomes de carbone, Z et $Z_1$ pouvant être identiques ou différents, ces motifs alkylènes pouvant être enchaînés de manière aléatoire ou ordonnés sous forme de blocs,
- $R_1$ représente H ou une chaîne hydrocarbonée, linéaire, ramifiée ou (hétéro)cyclique, avantageusement choisie parmi les groupes aryles en $C_6$-$C_{30}$ et les groupes alkyles en $C_1$-$C_{30}$, éventuellement substitués, avantageusement groupes alkyles en $C_4$-$C_{16}$ et éventuellement substitués par au moins un halogène, notamment un fluor,
- $X_1$ représente O ou N(R), R représentant H, un groupe alkyle comprenant de 1 à 20 atomes de carbone, une liaison ou une chaîne hydrocarbonée, contenant éventuellement au moins un hétéroatome, de préférence choisi parmi l'oxygène ou le soufre, reliée à $R_1$ pour constituer un radical bivalent alkylène, linéaire ou ramifié, éventuellement substitué, comprenant de 2 à 30 atomes de carbone, ledit radical alkylène étant constitué de préférence de 3 à 5 atomes de carbone, et contenant éventuellement au moins un hétéroatome de préférence choisi parmi l'oxygène ou le soufre.

Dans le cadre de la présente invention, l'acide peut éventuellement être obtenu par un précurseur d'un composé acide tel qu'un anhydride ou un chlorure d'acide.

Dans le cadre de la présente invention, l'amine peut également être sous forme d'un sel.

La composition telle que définie ci-dessus comprend de préférence une amine répondant à la formule (IV) suivante :

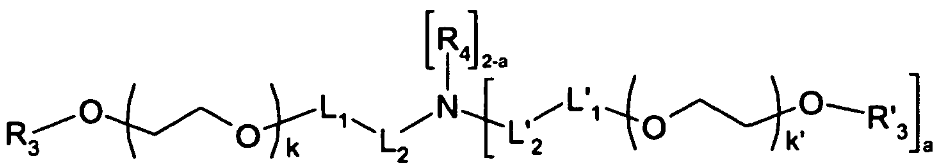
(IV)

dans laquelle :

- a est égal à 0, 1 ou 2;
- $R_4$ représente un atome d'hydrogène ou une chaîne hydrocarbonée, linéaire ou ramifiée, avantageusement choisie parmi les groupes alkyles, cycliques ou non, en $C_1$-$C_{20}$, et de préférence parmi les groupes alkyles en $C_1$-$C_4$, ou parmi les groupes aryles comprenant de 6 à 30 atomes de carbone ; et lorsque a = 0, les groupes $R_4$ peuvent être identiques ou différents et le cas échéant peuvent former entre eux un cycle comprenant de 2 à 20 atomes de carbone, de préférence de 4 à 6 atomes de carbone ;
- $R_3$ et $R'_3$, identiques ou différents, représentent un atome d'hydrogène ou une chaîne hydrocarbonée, linéaire ou ramifiée ou (hétéro)cyclique éventuellement substituée, avantageusement choisie parmi les groupes alkyles en $C_1$-$C_{20}$, et de préférence parmi les groupes alkyles en $C_1$-$C_4$, ou parmi les groupes aryles comprenant de 6 à 30 atomes de carbone ;
- k représente un nombre entier supérieur ou égal à 1, de préférence supérieur ou égal à 2, avantageusement compris de 5 à 60, et de préférence de 5 à 40 ;
- k' représente un nombre entier avantageusement compris de 0 à 60, et de préférence de 5 à 40 ;
- $L_1$ et $L'_1$, identiques ou différents, représentent, indépendamment l'un de l'autre, un radical de formule $-[-L'-O-]_t-$, t représentant un nombre entier compris de 0 à 20, et L' représentant un radical alkylène, linéaire ou ramifié, comprenant de 3 à 10 atomes de carbone, L' représentant de préférence un radical $-CH(CH_3)-CH_2-$ ou $-(CH_2)_4-$, les t groupes L' pouvant être identiques ou différents ;
- $L_2$ et $L'_2$, identiques ou différents, représentent, indépendamment l'un de l'autre, un radical bivalent alkylène, linéaire ou ramifié, comprenant avantageusement de 1 à 20 atomes de carbone, et représentant de préférence un radical $-CH(CH_3)-CH_2-$, $-CH_2-CH(CH_3)-$ ou $-(CH_2)_4-$,

Selon un autre mode de réalisation, la composition de l'invention comprend une polyamine de formule (V) suivante :

$$(R_4)_{(2-a)}-(D)_a-N-[L_2-L_1-(O-Z)_k-O-L'_1-L'_2-N(-D)]_g-L_2-L_1-(O-Z)_k-O-L'_1L'_2-N-(D)_a-(_R4)_{(2-a)} \quad (V)$$

dans laquelle :

- D représente H ou $R_3-(O-Z)_k-O-L_1-L_2-$ ou $R_4$,

- Z représente un résidu alkylène, éventuellement substitué, comprenant de 2 à 6 atomes de carbone, Z étant de préférence un groupe éthylène,
- g représente un nombre entier compris de 0 à 5, de préférence de 0 à 2,
- a, k, $R_3$, $R_4$, $L_1$, $L_2$, $L'_1$ et $L'_2$ étant tels que définis ci-dessus pour la formule (IV).

De façon préférée, l'amine ou au moins une amine du mélange d'amines de la composition de la présente invention répond à la formule (A) suivante :

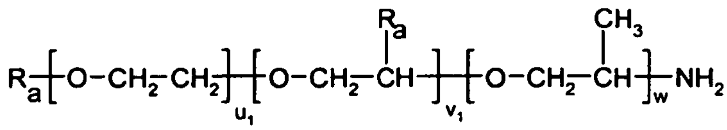

(A)

dans laquelle :

* $u_1$ représente un nombre entier, de préférence supérieur ou égal à 2, avantageusement compris de 5 à 60, et de préférence de 5 à 40
* $v_1$ représente un nombre entier compris de 0 à 30, de préférence de 0 à 10,
* w représente un nombre entier compris de 1 à 30, de préférence de 1 à 10,
* $R_a$ représente un groupe alkyle comprenant de 1 à 20 atomes de carbone, notamment un groupe méthyle ou un groupe alkyle comprenant de 12 à 14 atomes de carbone, tous les groupes $R_a$ pouvant être identiques ou différents.

Les amines préférées dans le cadre de la présente invention sont les suivantes :

- une amine de formule (A) dans laquelle $v_1$ est différent de 0, $R_a$ représente un radical alkyle en $C_{12}$-$C_{14}$ avec un ratio oxyde d'éthylène /oxyde de propylène ($u_1$/w) égal à 9/2 (cette amine est nommée Jeffamine® XTJ 247 et a un poids moléculaire d'environ 700) ; ou
- une amine de formule (A) dans laquelle $v_1$ est différent de 0, $R_a$ représente un groupe méthyle avec un ratio oxyde d'éthylène / oxyde de propylène ($u_1$/w) égal à 12/2 (cette amine est nommée Jeffamine® XTJ 581 et a un poids moléculaire d'environ 730).

De préférence, les compositions de l'invention présentent un ratio molaire monoester/diester compris de 1 à 99%.

La présente invention concerne également une composition telle que définie ci-dessus comprenant un acide sulfonique ou un acide sulfinique de formule (I-2-1) suivante :

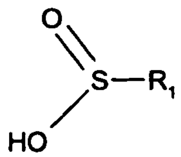

dans laquelle $R_1$ représente une chaîne hydrocarbonée, linéaire, ramifiée ou (hétéro)cyclique, avantageusement choisie parmi les groupes aryles en $C_6$-$C_{30}$ et les groupes alkyles en $C_1$-$C_{30}$, éventuellement substitués, avantageusement groupes alkyles en $C_4$-$C_{16}$ et éventuellement substitués par au moins un halogène, notamment un fluor.

Ainsi, les tensioactifs préférés selon la présente invention sont choisis parmi les sels suivants : sels de bis (2-éthyl-hexyl)phosphate de XTJ 581, sels de dibutylphosphate de XTJ 581, sels de paratoluènesulfonate de XTJ 581, sels de dodécylbenzènesulfonate de XTJ 581 et sels de cétyl éther de 3-phosphonopropyl tétra oxyéthylène de XTJ 247.

La composition selon la présente invention peut comprendre une molécule portant à la fois les fonctions amines et les fonctions acides, notamment un acide aminé avec des fonctions polyéthers.

Dans le cadre de la présente invention, il est possible que tout ou partie de l'acide et/ou de l'amine réagisse avec les fonctions NCO des polyisocyanates pour donner un polyisocyanate tensioactif.

La composition selon la présente invention peut également comprendre des composés tels que ceux issus de la réaction d'un polyisocyanate avec un polyalkylène glycol mono alkyle éther, de préférence polyéthylène glycol mono alkyle éther, à raison d'un pourcentage pondéral compris de 5 à 20 % de préférence de 8 à 15% en poids.

Ainsi, la composition selon la présente invention peut également comprendre des composés tels que ceux

commercialisés par Bayer (par exemple Bayhydur® N 3100 ou Bayhydur® 305, Bayhydur® 302), à savoir un tensioactif-polyisocyanate (polyéthylène glycol mono alkyle éther ayant réagi avec les fonctions NCO à raison de 5 à 15% en poids), ou encore comme des composés tels que les Bayhydur® XP 2487 ou XP 2655 dans lesquels la partie tensioactive est constituée par le greffage de motifs sulfonates neutralisés par une amine.

Selon un mode de réalisation particulier, la composition selon la présente invention est caractérisée en ce que le (poly)isocyanate est un (poly)isocyanate choisi parmi les produits d'homo- ou d'hétéro-condensation d'alcoylène-diisocyanate, comprenant notamment des produits du type "biuret" et du type "trimères", voire "prépolymères" à fonction isocyanate, comportant notamment des fonctions urée, uréthane, allophanate, ester, amide, acylurée, isocyanurate, oxadiazinetrione, immino-dimère, immino-trimère (imminotriazinedione), immino-oxadiazinedione (encore appelé trimère asymétrique), diazétidinedione (encore appelé dimère), et parmi les mélanges en contenant.

Les composés polyisocyanates peuvent également comporter des fonctions carbamates vraies (R-O-C(=O)-$NH_2$) ou des fonctions époxy ou des fonctions carbonates de préférence cycliques.

Il peut s'agir, par exemple, des polyisocyanates commercialisés par la Société Rhodia sous la dénomination "Tolonate®".

Les polyisocyanates qui sont utilisés pour la préparation des compositions polyisocyanates hydrodispersibles ont des titres NCO compris en général entre 5 et 25%.

Des monoisocyanates particuliers peuvent être utilisés pour la préparation des compositions polyisocyanates hydrodispersibles afin de moduler certaines propriétés. A titre d'exemple de tels monoisocyanates on peut citer les isocyanato propyl trialkoxysilane.

D'autres polyisocyanates de fonctionnalité NCO supérieure à 2 peuvent aussi être utilisés pour la préparation des compositions polyisocyanates hydrophiles. On peut ainsi citer l'isocyanatoéthyl du diisocyanate de lysine qui permet de diminuer la viscosité des compositions polyisocyanates finales.

Il est aussi possible d'utiliser des (poly)isocyanates tels que définis ci-dessus et qui sont en outre rendus hydrophiles par greffage d'un additif d'hydrophilisation convenable.

De manière générale, les (poly)isocyanates préférés sont les (poly)isocyanates susceptibles d'être obtenus, et généralement obtenus par homo- ou hétéro-condensation de monomères isocyanates aliphatiques, (cyclo- ou aryl-) aliphatiques, choisis dans le groupe constitué des monomères suivants :

- 1,6-hexaméthylène di-isocyanate,
- 1,12-dodécane di-isocyanate,
- cyclobutane-1,3-di-isocyanate,
- cyclohexane-1,3 et/ou 1,4-di-isocyanate,
- 1-isocyanato-3,3,5-triméthyl-5-diisocyanatométhylcyclohexane (isophorone di-isocyanate, IPDI),
- les isocyanatométhyloctylènedi-isocyanate (TTI),
- 2,4 et/ou 2,6-hexahydrotoluylène di-isocyanate ($H_6$TDI),
- hexahydro-1,3 et/ou 1,4-phénylène di-isocyanate,
- perhydro 2,4' et/ou 4,4'-diphénylméthane di-isocyanate ($H_{12}$MDI), et en général les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylilène di-isocyanate (TMXDI),
- le lysine di-isocyanate ainsi que les esters de la lysine di- ou tri-isocyanate (LDI ou LTI),
- le 2,4- et/ou le 2,6-toluylène di-isocyanate,
- le diphénylméthane-2,4' et/ou 4,4'-di-isocyanate (MDI),
- le 1,3- et/ou le 1,4-phénylène di-isocyanate,
- le triphénylméthane-4,4',4"-triisocyanate, et
- les oligomères du MDI ou du TDI.

Les produits d'homo-condensation sont les produits issus de la condensation d'un des monomères isocyanates, listés ci-dessus, avec lui-même. Les produits d'hétéro-condensation sont les produits issus de la condensation de deux ou plusieurs des monomères listés ci-dessus, entre eux et/ou éventuellement avec un ou plusieurs composés à hydrogène mobile, tels que par exemple un alcool, un diol et autres composés analogues.

Les polyisocyanates compris dans la composition de la présente invention peuvent également être des dérivés polyisocyanates issus d'isocyanates aromatiques utilisés seuls ou en mélange avec des composés aliphatiques.

Toutefois l'utilisation de ces dérivés aromatiques est limitée en quantité voire n'est pas préférée car elle conduit généralement à des revêtements qui peuvent subir une coloration, en général un jaunissement, au cours du vieillissement, notamment si les revêtements sont fortement exposés aux rayonnements ultra violet, par exemple le rayonnement ultra

violet solaire.

À titre d'exemples d'isocyanates aromatiques, on peut citer de manière non limitative :

le 2,4- et/ou le 2,6-toluylène di-isocyanate,
le diphénylméthane-2,4' et/ou 4,4'-di-isocyanate (MDI),
le 1,3- et/ou le 1,4-phénylène di-isocyanate,
le triphénylméthane-4,4',4"-triisocyanate, et
les oligomères du MDI, ou TDI.

Des mélanges de ces polyisocyanates (cyclo)aliphatiques et/ou aromatiques peuvent aussi être utilisés.

La viscosité des composés polyisocyanates non masqués utiles à l'invention est située dans une plage de viscosité très large de par la structure des composés polyisocyanates qui peuvent être mis en jeu. La viscosité est généralement supérieure à 10 mPa.s, à 25°C à 100% d'extrait sec, de préférence supérieure à 100 mPa.s, à 25°C et à 100 % d'extrait sec.

On peut citer à titre d'exemple la viscosité de produits de la société Rhodia, tels que le Tolonate® HDT-LV2 qui présente une viscosité de l'ordre de 600 mPa.s $\pm$ 150 mPa.s, à 25°C, ou encore le Tolonate® HDT de viscosité de 2 400 mPa.s $\pm$ 400 mPa.s, à 25°C, ou encore le Tolonate® HDB de viscosité de 9 000 mPa.s $\pm$ 2000 mPa.s, à 25°C, ou encore le Tolonate® HDT HR de viscosité d'environ 20 000 mPa.s, à 25°C à 100% d'extrait sec, ou 2 000 mPa.s à 25°C à 90% d'extrait sec dans l'acétate de n-butyle.

Certains composés polyisocyanates sont des solides à 100% d'extrait sec. C'est par exemple le cas du trimère isocyanurate de l'IPDI ou du dimère de l'IPDI. À titre d'exemple on peut donner les viscosités de certains de ces composés en solution organique ; ainsi le Tolonate® IDT 70 S (trimère isocyanurate de l'IPDI) présente une viscosité de l'ordre de 1 700 mPa.s $\pm$ 600 mPa.s à 25°C pour une formulation à 70 % d'extrait sec dans le Solvesso® 100, le Tolonate® IDT 70 B (trimère isocyanurate de l'IPDI) présente une viscosité de l'ordre de 600 mPa.s $\pm$ 300 mPa.s à 25°C pour une formulation à 70 % d'extrait sec dans l'acétate de n butyle.

Compte tenu de leur aptitude à conférer aux revêtements une résistance élevée au gravillonnage, sont préférés les produits d'homo-condensation et/ou d'hétéro-condensation à partir d'un monomère isocyanate aliphatique, en particulier non cyclique, de préférence le HDI.

La présente invention concerne également une composition telle que définie ci-dessus, dans laquelle le (poly)isocyanate est un (poly)isocyanate présentant une fonctionnalité moyenne en fonctions isocyanates au moins égale à 2 et au plus égale à 20, de préférence comprise de 2,2 à 10, et avantageusement comprise de 2,5 à 6 et mieux encore de 2,75 à 5.

On a observé que lorsque la fonctionnalité moyenne en fonctions isocyanate du (poly)isocyanate augmente, alors la résistance au gravillonnage et la dureté du revêtement sont améliorées, ce phénomène est particulièrement marqué lors des opérations de retouche.

Dans le cadre de la présente invention, la fonctionnalité moyenne en fonctions isocyanates f(iNCO) est définie par la formule suivante :

$$f(iNCO) = \frac{Mn \times [iNCO]}{42 \times 100}$$

où : Mn représente la masse moléculaire moyenne en nombre obtenue par perméation de gel et
[iNCO] représente la concentration en fonctions isocyanates en grammes pour 100 grammes.

Les (poly)isocyanates présents dans la composition selon l'invention peuvent se présenter sous forme masquée, c'est-à-dire que les fonctions isocyanates ne sont pas libres, mais masquées à l'aide d'un agent masquant ou d'un mélange d'agents masquants, tels qu'ils sont définis ci-après. On préfère notamment l'utilisation de compositions de (poly)isocyanates masqués pour l'élaboration d'une formulation de revêtement de type mono-composant (formulation 1 K).

Dans le présent exposé, on entend par (poly)isocyanate masqué un (poly)isocyanate pour lequel au moins 50%, de préférence 80%, avantageusement 90% et plus préférentiellement encore toutes les fonctions isocyanates sont masquées.

L'agent masquant ou le mélange d'agents masquants qui protège temporairement, voire définitivement, les fonctions isocyanates sont des composés qui présentent au moins une fonction portant un hydrogène labile, généralement une fonction portant un hydrogène labile, de préférence une seule fonction portant un hydrogène labile et qui sont réactifs vis-à-vis de la fonction isocyanate. À cette fonction portant un hydrogène labile, peut être associée une valeur de $pK_a$ qui correspond soit à l'ionisation d'un acide [y compris l'hydrogène des fonctions -ols (dans la présente description on entend par "-ol(s)" les phénols et les alcools)], soit à l'acide associé d'une base (en général azotée).

Plus précisément pour optimiser les résultats de la présente invention, ledit $pK_a$ (ou l'un d'entre eux si l'on peut en définir plusieurs) de la fonction portant un ou des hydrogènes labiles est au moins égal à 4, avantageusement 5, de préférence 6 et est au plus égal à 14, avantageusement 13, de préférence 12, et de manière encore préférée 10. Une exception doit cependant être faite pour les lactames, dont le $pK_a$ est supérieur à ces valeurs et qui constituent des agents masquants possibles bien que non préférés pour l'invention.

Un agent masquant est dit temporaire quand la fonction isocyanate est protégée temporairement par l'agent masquant et ne réagit pas dans les conditions de stockage du système formulé avec les fonctions hydroxyles du composé à hydrogène mobile notamment le polyol, mais est ensuite libéré au cours de la réaction de réticulation thermique au four.

La fonction isocyanate libérée réagit alors avec les fonctions à hydrogène mobile ou réactif du polyol pour donner une liaison uréthane et conduire au réseau polyuréthane qui constitue une partie du revêtement. L'agent masquant temporaire est soit éliminé comme composé organique volatil avec la plupart des solvants de formulation, soit reste dans le film, soit réagit avec la résine aminoplast, lorsque la formulation en contient.

À titre d'exemples non limitatifs d'agents masquants temporaires selon l'invention, on peut citer les dérivés de l'hydroxylamine tels que l'hydroxysuccinimide et les oximes comme la méthyléthylcétoxime, les dérivés de l'hydrazine tels que les pyrazoles, les dérivés des triazoles, les dérivés des imidazoles, les dérivés des phénols ou assimilés, les dérivés des amides tels les imides et les lactames, les amines encombrées telles que la N-isopropyl-N-benzylamine, ainsi que les malonates ou cétoesters et les hydroxamates. Ces composés peuvent éventuellement comporter des substituants notamment des chaînes alkyles ou alcoyles.

Pour la détermination des valeurs de $pK_a$ définies plus haut, on pourra se reporter à "The determination of ionization constants, a laboratory manual", A. Albert of E.P. Serjeant ; Chapman and Hall Ltd, London".

Pour la liste des agents masquants, on pourra se reporter à Z. Wicks (Prog. Org. Chem., 1975, 3, 73 et Prog. Org. Chem., 1989, 9,7) et Petersen (Justus Liebigs, Annalen der Chemie 562, 205, (1949).

On préfère comme agents masquants temporaires la méthyléthylcétoxime encore appelée MEKO, le 3,5-dimétyhylpyrazole encore appelé DMP, les 2 ou 4 alkylimidazoles, les malonates de dialkyles, les β-céto-esters cycliques, les amines, les amines encombrées et le caprolactame.

La présente invention ne se limite pas aux seuls agents masquants temporaires, mais peut aussi mettre en jeu des agents masquants dits définitifs. Ceux-ci se caractérisent par le fait que les fonctions isocyanates sont protégées par l'agent masquant et ne réagissent pas avec les fonctions hydroxyles du composé à hydrogène mobile notamment le polyol, dans les conditions de stockage du système formulé, ni au cours de la réaction de réticulation thermique au four.

Les fonctions isocyanates ne sont donc pas restaurées au moment de la réaction de réticulation par cuisson au four et restent masquées, lesdites fonctions masquées pouvant alors réagir dans les conditions de réticulation au four avec les fonctions méthyloles ($-N-CH_2-OH$) ou alkoxyalkyle ($-N-CH_2-O$-alkyle) des résines aminoplastiques (mélamines, benzoguanamine...), en présence d'un catalyseur acide de préférence sulfonique ou d'un précurseur latent de ce catalyseur qui peut être un sel d'amine tertiaire d'un acide sulfonique.

Dans certains cas, le tensioactif présent dans la composition de revêtement selon l'invention peut jouer le rôle de catalyseur, notamment lorsque le tensioactif est de type anionique et comporte un atome de phosphore.

Les agents masquants utilisés pour protéger définitivement la fonction isocyanate sont en général des composés à fonctions hydroxyle ou sulfhydrile, de préférence monofonctionnels, tels que les hydroxy(cyclo)alkanes, par exemple le méthanol, les butanols, le cyclohexanol, le 2-éthylhexanol ou des composés à fonctions acides carboxyliques, tels que l'acide propionique, l'acide pivalique, l'acide benzoïque. Ces composés peuvent éventuellement porter un ou plusieurs substituants.

Ces agents masquants dits « définitifs » peuvent également être des fonctions isocyanates masquées par des composés comportant au moins une fonction réticulable capable de polymériser par rayonnement UV. À titre d'exemple, on peut citer, comme agents masquants « définitifs », les hydroxy-alcoyl-acrylates ou -méthacrylates.

On peut aussi dans certains cas utiliser, en quantité généralement limitée, des agents masquants bi- ou polyfonctionnels temporaires, comportant des fonctions capables de donner des fonctions isocyanates masquées temporaires et/ou définitives. Toutefois, ceci n'est pas préféré car les composés polyisocyanates masqués présentent rapidement des viscosités élevées, et ce, d'autant plus que la fonctionnalité en fonctions isocyanates (NCO) est plus élevée.

De façon préférée, dans la composition telle que définie ci-dessus, le rapport massique entre le système tensioactif et le (poly)isocyanate est compris de 3 à 30%, de préférence de 5 à 25%, et avantageusement de 5 à 20%.

Ces valeurs permettent d'avoir une émulsion adaptée aux diverses applications envisagées.

De façon avantageuse, la composition selon la présente invention peut contenir en outre un solvant, la quantité de solvant par rapport à la quantité du mélange formé par le système tensioactif et le (poly)isocyanate étant inférieure à 50% en poids, et de préférence inférieure à 40% en poids, le solvant étant choisi dans le groupe constitué des esters, des éthers, des acétals, des carbonates cycliques ou linéaires, des lactones, des éthers de glycol ou de propylène glycol et des N-alkyl-amides.

Le solvant est utilisé dans ce mode de réalisation afin de diminuer la viscosité des polyisocyanates de départ.

Cette teneur en solvant est notamment nécessaire pour mettre en oeuvre des composés comme l'IPDT qui

sont solides à température ambiante et qui sont utilisés sous forme de formulations.

La teneur en solvant est minimalisée afin de ne pas avoir des compositions trop riches en COV (Composés organiques volatiles).

La présente invention concerne également une composition, réticulable par traitement thermique, telle que définie ci-dessus, comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction SH, et le cas échéant au moins un solvant organique.

De façon préférée, la composition telle que définie ci-dessus comprend :

- de 10 % à 60 % en poids de (poly)isocyanate, par rapport au poids total de la composition sans solvant, (% sur sec) ;
- de 0,25 % à 12 % en poids de tensioactif, par rapport au poids total de la composition sans solvant (% sur sec) ;
- de 30% à 80% en poids de composé porteur d'au moins une fonction à hydrogène mobile, par rapport au poids total de la composition sans solvant (% sur sec) ; et
- de 0% à 30% en poids de solvant organique, par rapport au poids total de la composition.

Avantageusement, la composition telle que définie ci-dessus peut comprendre en outre au moins une résine aminoplastique (résine "aminoplast") de type mélamine-aldéhyde, en particulier mélamine-formaldéhyde, et/ou urée-aldéhyde, en particulier urée-formaldéhyde, ou benzoguanamine et/ou leurs dérivés alkoxyalkyles.

Selon un mode de réalisation préféré, dans la composition telle que définie ci-dessus, la quantité de résine(s) aminoplast est comprise de 15% à 25% en poids par rapport au poids total de la composition sans solvant (% sur sec).

La composition selon la présente invention comprend également une résine de type aminoplastique ou aminoplast de type mélamine formol et/ou urée formol et/ou benzoguanamine formol. Ces polymères sont connus et des détails relatifs à leurs synthèses sont proposés dans les ouvrages cités précédemment, notamment dans le livre de Stoye et Freitag en page 102, chapitre 6.2.

Ces résines aminoplast réagissent notamment à une température comprise entre 100 et 180°C avec les fonctions uréthanes du réseau polyuréthane préalablement créées ou formées au cours de la réaction de réticulation au four par la réaction des fonctions isocyanates libérées avec les fonctions hydroxyles du polyol, ou avec les fonctions carbamates vraies (R-O-C(=O)-$NH_2$) portées éventuellement par les polyols ou les polyisocyanates.

La réaction de réticulation de ces mélamines avec les fonctions uréthanes ou carbamates vraies (R-O-C(=O)-$NH_2$) est une réaction connue qui est généralement catalysée par un acide fort tel que l'acide para-toluènesulfonique ou l'acide naphtalène-sulfonique, ou encore une forme latente de ces catalyseurs acides à savoir les sels d'amine tertiaire de ces acides forts. On pourra se reporter aux livres cités précédemment pour avoir des informations plus complètes sur ces résines aminoplast et leurs synthèses.

La présence d'une ou plusieurs résines aminoplast dans la composition de revêtement selon la présente invention est particulièrement avantageuse pour la formation de la couche de base (ou "base coat"), et n'est en général pas nécessaire pour la formation de la couche de finition (ou "top coat"), bien que ceci ne soit pas exclu du champ de l'invention.

La présente invention concerne également une composition telle que définie ci-dessus, dans laquelle le composé porteur d'au moins une fonction à hydrogène mobile est un polymère contenant au moins deux fonctions hydroxyles (alcool ou phénol) et/ou fonctions thiols et/ou des fonctions amines primaires ou secondaires et/ou contenant des fonctions acides carboxyliques et/ou contenant des fonctions précurseurs, de type époxy ou carbonates qui, par réaction avec un nucléophile adéquat, libèrent les fonctions hydroxyles.

De préférence les composés sont choisis parmi les polyols qui peuvent être utilisés seuls ou en mélange.

On peut à titre d'exemples de tels composés citer les polyols ou les polyuréthanes en dispersion, les polyamines, les polythiols, les polycaprolactones, les polycarbonates ou les polyacides. Ces polymères peuvent contenir éventuellement une multiplicité de fonctions à hydrogènes mobiles. Des mélanges de tels polymères peuvent aussi être utilisés. D'une manière générale on préfère les polyols choisis parmi les polyesters, les polyacrylates, les polycaprolactones, les polycarbonates, les polyéthers ou leurs mélanges.

Pour les revêtements exposés aux conditions extérieures, les polyesters ou les polyols acryliques ou les polyuréthanes polyols seront avantageusement retenus.

Les compositions polyols sous dénomination latex peuvent aussi être utilisées. Ces composés sont en général obtenus par polymérisation radicalaire des composés à fonctions alcényles tels qu'acrylates, méthacrylates, styrényles...

Dans le cadre de la présente invention, il est également possible d'ajouter le sel d'acide et d'amine au composé porteur des liaisons à hydrogène mobile (polyols, polyamines, acides polycarboxyliques et polythiols) et d'ajouter ensuite le polyisocyanate au mélange préalablement préparé.

De façon encore préférée, la composition telle que définie ci-dessus est caractérisée en ce que le composé porteur d'au moins une fonction à hydrogène mobile est un polyol choisi parmi les polymères acryliques ou polyesters ou polyuréthanes.

Pour des raisons de flexibilité des revêtements et particulièrement pour la couche dite « primaire », on préfère utiliser des polyols polyesters ou des polyesters uréthanes. En général, on utilise un mélange de deux résines polyesters ou polyesters uréthanes, l'une se caractérisant par un caractère « dur » et l'autre par un caractère « mou » ou « souple ». Le caractère dur ou souple des polyesters est conféré par la nature des monomères utilisés au cours de leur synthèse.

Ainsi un polyester « dur » sera obtenu en choisissant des monomères acides ou alcools aromatiques et/ou cycloaliphatiques et/ou fortement ramifiés. À titre d'exemples de ce type de monomères, on peut citer l'anhydride phtalique, ou le cyclohexane-diol ou le 2, 2, 4 -triméthylpentanediol.

Un polyester « souple » est obtenu en choisissant des monomères aliphatiques linéaires peu ramifiés, tels que l'acide adipique ou le 1,4-butanediol ou le 1,6-hexanediol, ou bien comportant des hétéroatomes dans leur structure, tels que les di- ou poly-éthylène glycols. Ces derniers ne sont toutefois pas recherchés dans la mesure où ces composés présentent une faiblesse quand à leur stabilité aux rayonnements ultra violet.

Les polyols polyesters sont industriels et leur synthèse est largement décrite et connue de l'homme de l'art. Pour plus de détails on pourra se reporter aux ouvrages suivants : « Matériaux polymères, structure, propriétés et applications » de Gottfried W. Ehrenstein et Fabienne Montagne édité en 2000 chez Hermès Science ; « Handbook of Polyuréthanes » de Michael Szycher, édité en 1999 chez CRC press ; « Resins for coatings, Chemistry, Properties and Applications » de D. Stoye and W. Freitag, édité chez Hanser en 1996, ainsi que l'article d'Eurocoat 97 préalablement cité. On peut également consulter les catalogues commerciaux des sociétés distributrices de polyols notamment le livre intitulé « Specialty Resins, creating the solution together » de la société AKZO NOBEL RESINS édité en février 2001.

Avantageusement, le polyol tel que défini ci-dessus présente une fonctionnalité en groupes à hydrogènes mobiles au moins égale à 2, en général comprise de 2 à 100, et de préférence de 2 à 30.

Selon un autre mode de réalisation avantageux, le polyol présente une fonctionnalité en OH comprise de 2 à 25, et de préférence de 2 à 10.

En général, pour l'application visée, une fonctionnalité en OH trop élevée conduirait à des composés trop "durs". On préfère donc utiliser des polyols polyesters de fonctionnalité relativement faible inférieure à 15, de préférence inférieure à 10.

La définition de la fonctionnalité moyenne en fonctions hydroxyles par chaîne polymère est par exemple donnée dans l'article de Ben Van Leeuwen « High solids hydroxy acrylics and tightly controled molecular weight » paru dans le recueil de conférences de Eurocoat 1997 (pp 505 - 515) en page 507.

Cette fonctionnalité moyenne F(OH) se calcule à l'aide de l'équation suivante :

$$F(OH) = \frac{\text{Nombre OH} \times Mn}{56100}$$

dans laquelle :

F(OH) représente la fonctionnalité moyenne en fonctions hydroxyles ;
Nombre OH représente le titre en fonctions hydroxyles exprimé en mg de KOH (hydroxyde de potassium) par gramme de polymère ; et
Mn représente la masse moléculaire moyenne en nombre du polymère, elle-même déterminée par chromatographie de perméation de gel (GPC), par comparaison avec des étalons de polystyrène calibrés.

La présente invention concerne également une composition telle que définie ci-dessus, caractérisée en ce que la masse moléculaire moyenne en nombre du composé porteur d'au moins une fonction à hydrogène mobile est compris de 100 à 100 000.

Selon un mode de réalisation préféré, la composition telle que définie ci-dessus comprend un polyol qui est un polyol polyester de masse moléculaire moyenne en nombre comprise de 500 à 10 000, de préférence de 600 à 4 000.

Dans certains cas on peut aussi utiliser un polyol ou un mélange de polyols polyacryliques qui confèrent une dureté plus élevée au revêtement. Ces polyols peuvent être « durs » ou « souples » selon que l'on utilise des monomères présentant respectivement un caractère aromatique et/ou cycloaliphatique et/ou fortement ramifié pour cette propriété « dure » et des monomères présentant majoritairement un caractère aliphatique pour la propriété « souple ».

La synthèse des polyols acryliques est également connue de l'homme de l'art et on pourra consulter les livres préalablement cités pour avoir plus de détail sur leurs synthèses.

La masse moléculaire moyenne en nombre pour les polyols acryliques est généralement comprise entre 134 et 50 000, de préférence entre 500 et 25 000, avantageusement entre 1 000 et 15 000.

Le titre en fonctions hydroxyles est généralement compris entre 10 et 750 mg de KOH par gramme de polymère, de préférence compris entre 15 et 500 mg de KOH par gramme de polymère.

À titre d'exemple de polyols acryliques, on peut se reporter à l'article d'Eurocoat 97 préalablement cité, en

page 515, où sont indiquées les caractéristiques de quelques polyols acryliques, ces exemples n'ayant pas un caractère limitatif.

On peut aussi utiliser des polyols hyperbranchés qui se caractérisent généralement par une fonctionnalité plus élevée que les polyols linéaires, mais ces produits ne sont pas préférés compte tenu de la viscosité élevée de ces produits.

Des polyols structurés ou à blocs peuvent aussi être utilisés si l'on cherche un effet de compartimentation de propriété. Toutefois ces produits, généralement plus coûteux, ne sont utilisés que pour apporter une propriété particulière. Ces composés sont par exemple un agent de rhéologie ou un agent d'aide à la dispersion de pigments.

En règle générale, pour les besoins de la présente invention, le ratio fonctions isocyanates / fonctions à hydrogène mobile est compris entre 3 et 0,5, de préférence entre 1,5 et 0,8. En particulier, lorsque le composé à hydrogène mobile est un polyol, le ratio fonctions isocyanate / fonctions hydroxyle est compris entre 3 et 0,5, de préférence entre 1,5 et 0,8.

La présente invention concerne également un procédé de préparation d'une composition telle que définie ci-dessus, comprenant une étape de mélange de l'acide, de l'amine et du (poly)isocyanate.

Il est préférable d'éviter le cas où l'amine, quand elle est primaire ou secondaire, est présente seule avec l'isocyanate car elle peut réagir et donner une urée.

Il est préférable en cas d'utilisation d'amine secondaire ou primaire de procéder à l'étape de neutralisation préalablement à l'ajout avec le polyisocyanate pour éviter les réactions non désirées entre groupes NCO et amine. Dans le cas d'une amine tertiaire, on peut éventuellement procéder au mélange de l'amine avec le polyisocyanate puis effectuer l'étape de neutralisation en rajoutant la partie acide.

La présente invention concerne un procédé de préparation d'une composition telle que définie ci-dessus, comprenant une étape de mélange d'un acide dont le $pK_a$ dans l'eau est inférieur à 5, d'une amine porteuse d'au moins une fonction oxyde d'alkylène et d'un (poly)isocyanate.

La présente invention concerne également un procédé de préparation d'une composition telle que définie ci-dessus, dans laquelle l'amine du tensioactif est une amine primaire ou secondaire, ledit procédé étant caractérisé en ce qu'il comprend une étape de mélange de l'acide et de l'amine, suivie d'une étape d'addition du (poly)isocyanate.

La présente invention concerne également un procédé de préparation d'une composition telle que définie ci-dessus, dans laquelle l'amine du tensioactif est une amine tertiaire, ledit procédé étant caractérisé en ce qu'il comprend une étape de mélange de l'acide et de l'amine, suivie d'une étape d'addition du (poly)isocyanate, ou en ce qu'il comprend une étape de mélange de l'amine et du (poly)isocyanate, suivie d'une étape d'addition de l'acide.

Le procédé de préparation de la présente invention est effectué à une température comprise de préférence de 5 à 100°C avantageusement à une température comprise de 15 à 60°C et mieux encore de 20 à 50°C, et ce en travaillant de préférence en atmosphère inerte et en évitant l'introduction d'eau. En général, il est préférable de travailler à température ambiante, mais pour des raisons particulières de formulations de polyisocyanates visqueux, il est possible de travailler à des températures supérieures à la température ambiante.

La présente invention concerne également un procédé de fabrication d'un substrat revêtu, caractérisé en ce qu'il comprend une étape d'application sur un substrat d'une composition réticulable par traitement thermique telle que définie ci-dessus, et une étape de réticulation par traitement thermique de ladite composition.

Selon un mode de réalisation avantageux, le procédé tel que défini ci-dessus est caractérisé en ce que la réticulation est effectuée à une température supérieure à 0°C de préférence proche de la température ambiante et avantageusement par traitement thermique à une température comprise de 60°C à 300°C, de préférence supérieure à 80°C et inférieure à 300°C avantageusement de 100°C à 200°C, pendant une durée comprise de quelques secondes à quelques heures.

La composition réticulable susmentionnée peut être utilisée comme première couche (élaboration d'un revêtement pour première monte) ou comme couche secondaire, notamment comme durcisseur de la couche primaire d'un revêtement, ou pour des opérations de retouches.

La présente invention concerne également un substrat revêtu susceptible d'être obtenu par le procédé tel que défini ci-dessus.

Le substrat peut être de tout type, et est généralement un substrat métallique, par exemple aluminium ou acier, en particulier acier inoxydable. Le substrat peut également être un substrat en matériau plastique, c'est-à-dire un matériau polymère thermoplastique ou thermodurcissable, comprenant le cas échéant des charges, par exemple des charges de renfort, comme par exemple des fibres de verre, de carbone, et autres.

Grâce aux propriétés conférées par le revêtement précité, le substrat revêtu peut le cas échéant être plié, formé, embouti. Le substrat ainsi revêtu possède une excellente résistance au gravillonnage, ainsi qu'une excellente résistance aux lavages sous pression, voire haute-pression, notamment dans le cas des substrats en matière plastique.

D'autres composés additifs peuvent être ajoutés aux formulations de revêtements pour notamment faciliter la mise en oeuvre ou pour apporter une fonction de protection ou d'embellissement. A ce titre, on peut citer les anti-mousses, les pigments ou colorants ou additifs conférant une résistance à la rayure ou aux graffitis. Ce genre d'ajout est bien connu de l'homme de l'art ou du formulateur de revêtement qui ajustera les quantités aux propriétés visées par l'application.

Les domaines d'application des nouveaux composés sont les adhésifs, peintures et vernis, les colles, les produits de traitement du textile ou des fibres minérales ou organiques ou organo-minérales, le béton ou façades. Les supports à revêtir concernés sont les bois, les métaux, les textiles, les celluloses diverses, les composés minéraux, les verres.

## EXEMPLES

Le TOLONATE® HDT utilisé dans les exemples suivants est un polyisocyanate sur base Hexaméthylène diisocyanate (HDI) qui se caractérise essentiellement par la présence de cycles isocyanurates et dans une moindre mesure de fonctions biurets et de cycles dimères (diazetidine dione). Sa teneur en fonctions isocyanates est d'environ 22% ± 0,5% en poids et sa viscosité est comprise entre 2000 et 2800 mPa s à 25°C.

Le RHODOCOAT® X-EZM 502 est un polyisocyanate hydrodispersible sur base Hexaméthylène diisocyanate (HDI) qui se caractérise essentiellement par la présence de cycles isocyanurates et dans une moindre mesure de fonctions biurets et de cycles dimères (diazetidine dione). Sa teneur en NCO est d'environ 18,4% et sa viscosité de l'ordre de 3600 mPas à 25°C.

### Exemple 1 : Synthèse d'un sel tensioactif

Dans un réacteur tricol, on charge successivement 30 g d'acide dodécylbenzène sulfonique NANSSA de Huntsmann et 67 g de Jeffamine XTJ 581 de Huntsmann. Une exothermie se développe. On laisse sous agitation pendant une heure. On laisse revenir à température ambiante puis le produit est utilisé pour la préparation de la composition polyisocyanate hydrodispersible.

### Exemples 2 à 10 : Préparations d'autres sels tensioactifs

On procède comme pour l'exemple 1 en travaillant avec un ratio molaire acide / base 1/1.

| Exemple | Acide | Base |
|---|---|---|
| 2 | Bis (2 éthyl hexyl)hydrogénophosphate (Acros) | Jeffamine XTJ 581 Huntsmann |
| 3 | Didodécyl phosphate (Acros) | Jeffamine XTJ 581 Huntsmann |
| 4 | Composé phosphonopropyl* | Jeffamine XTJ 247 Huntsmann |
| 5 | Dibutyl phosphate (Acros) | Jeffamine XTJ 581 Huntsmann |
| 6 | Acide paratoluène sulfonique (Acros) | Jeffamine XTJ 581 Huntsmann |
| 7 | Dibutyl phosphate (Acros) | Jeffamine XTJ 247 Huntsmann |
| 8 | Bis (2 éthyl hexyl)hydrogénophosphate (Acros) | Surfonamine L 100 |
| 9 | Di dodécyl phosphate (Acros) | Surfonamine L 100 |
| 10 | Acide dodécylbenzene sulfonique (Acros) | Jeffamine XTJ 581 Huntsmann |
| * « composé phosphonopropyl » = composé correspondant au méthyl éther d'un phosphonopropyl tétra oxyéthylène qui correspond à la structure suivante $CH_{3O}$-$(CH_2$-$CH_2$-$O)_4$ - $C_3H_7$-P(=O)-$(OH)_2$ | | |

### Exemple 11: Préparation d'une composition polyisocyanate hydrodispersible

Dans un réacteur tricol double enveloppe et muni d'une agitation, on ajoute successivement 100 g de TOLONATE HDT de RHODIA et 20 g de sel tensioactif de l'exemple 1.

Le produit est agité pendant une heure à température ambiante puis est mis en flacon.

L'analyse RMN H1 et C13 en milieu CDCL3 confirme la structure du mélange. Le spectre Infra Rouge confirme bien la présence

- des bandes éther (1110 - 2850 et 949 $cm^{-1}$)
- de l'aromatique sulfoné en para (1238 - 1034 - 1009 - et 866 $cm^{-1}$)

- du sel d'amine primaire 3100 $cm^{-1}$
- des bandes isocyanurates (1689 $cm^{-1}$) et dimères (1767 $cm^{-1}$) et des fonctions NCO (2250 $cm^{-1}$).

<u>**Exemples 12 à 24**</u> **:** <u>**Préparations de compositions polyisocyanates hydrodispersibles**</u>

On procède comme pour l'exemple 11 en utilisant les sels des exemples 2 à 10.
Il est possible également d'utiliser dans la composition du Rhodocoat X-EZM 502 à la place du tolonate HDT.

| exemple | tensioactif (TA) de départ - exemple | % poids Rhodocoat X-EZM 502 | % poids TA | % poids Tolonate HDT |
|---|---|---|---|---|
| 12 | 2 | 0 | 20 | 80 |
| 13 | 2 | 0 | 10 | 90 |
| 14 | 2 | 50 | 5 | 45 |
| 15 | 5 | 50 | 5 | 45 |
| 16 | 5 | 0 | 10 | 90 |
| 17 | 5 | 0 | 10 | 90 |
| 18 | 5 | 50 | 5 | 45 |
| 19 | 1 | 50 | 5 | 45 |
| 20 | 1 | 0 | 10 | 90 |
| 21 | 4 | 0 | 10 | 90 |
| 22 | 4 | 0 | 10 | 90 |
| 23 | 4 | 50 | 5 | 45 |
| 24 | 4 | 50 | 5 | 45 |

<u>**Evaluation de la capacité d'auto emulsification**</u>

La composition et le caractère hydrophile/hydrophobes des différentes amines utilisées sont importants.
On utilise de préférence les amines suivantes :

<u>XTJ 247 (Huntsman)</u>

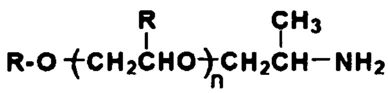

R = radical $C_{12}$-$C_{14}$ ratio oxyde d'éthylène/oxyde de propylène = 9/2 <u>XTJ 581 (Huntsman)</u>

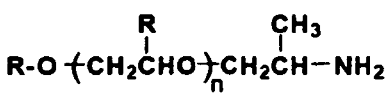

R = $CH_3$ ratio oxyde d'éthylène/oxyde de propylène = 12/2

Les compositions tensioactives sont évaluées en réalisant des formulations avec un polyol de type acrylique Macrynal 6299 (4,2% OH) de chez Cytec. Le ratio NCO/OH utilisé est de 1,4.
Les composés sont mélangés à la main à l'aide d'une spatule.
L'auto emulsification est notée de 1 à 5, "1" étant l'obtention d'un mélange homogène en moins d'une minute alors que "5" correspond à un mélange hétérogène.
Les compositions sont ensuite appliquées sur plaques de verre et l'aspect visuel du film après 24 h de séchage en conditions contrôlées (température = 23°C, humidité relative = 50%) est évalué.
"1" correspond à un film homogène et brillant, "5" correspond à un film présentant de nombreux défaut comme

du démouillage par exemple.

| exemple | partie anionique | partie cationique | % poids Rhodocoat X-EZM 502 | % poids TA | % poids Tolonate HDT | facilité de mélanqe | aspect du film |
|---|---|---|---|---|---|---|---|
| 12 | Bis(2-ethylhexyl) hydrogénophosphate | XTJ 581 | 0 | 20 | 80 | 3 | 3 |
| 13 | Bis(2-ethylhexyl) hydrogénophosphate | XTJ 581 | 0 | 10 | 90 | 1 | 2 |
| 14 | Bis(2-ethylhexyl) hydrogénophosphate | XTJ 581 | 50 | 5 | 45 | 1 | 1 |
| 15 | Dibutylphosphate | XTJ 581 | 50 | 5 | 45 | 1 | 1 |
| 16 | Dibutylphosphate | XTJ 581 | 0 | 10 | 90 | 1 | 2 |
| 17 | Dibutylphosphate | XTJ 581 | 0 | 10 | 90 | 1 | 1 |
| 18 | Dibutylphosphate | XTJ 581 | 50 | 5 | 45 | 1 | 1 |
| 19 | acide dodécyl-benzènesulfonique | XTJ 581 | 50 | 5 | 45 | 1 | 1 |
| 20 | acide dodécyl-benzènesulfonique | XTJ 581 | 0 | 10 | 90 | 1 | 1 |
| 21 | 3 Phosphonopropyl Alcohol Ethoxylate Cetyl Ether- 4 EO | XTJ 247 | 0 | 10 | 90 | 1 | 2 |
| 22 | 3 Phosphonopropyl Alcohol Ethoxylate Cetyl Ether- 4 EO | XTJ 247 | 0 | 10 | 90 | 1 | 2 |
| 23 | 3 Phosphonopropyl Alcohol Ethoxylate Cetyl Ether- 4 EO | XTJ 247 | 50 | 5 | 45 | 1 | 2 |
| 24 | 3 Phosphonopropyl Alcohol Ethoxylate Cetyl Ether- 4 EO | XTJ 247 | 50 | 5 | 45 | 1 | 1 |

## Revendications

**1.** Composition comprenant :

- au moins un (poly)isocyanate et
- au moins un tensioactif comprenant :

  (i) au moins un acide (ou un mélange d'acides), et
  (ii) au moins une amine ou polyamine, porteuse d'au moins une fonction oxyde d'alkylène,

ledit acide étant choisi parmi les acides sulfoniques, les acides sulfiniques, les monoesters et diesters des phosphates d'alkyle, les alkyl phosphoniques acides, les monoesters des alkylphosphoniques acides, les acides perfluoroacétiques, le bis trifluorométhane sulfonimide , le triéthylsulfonylméthane, les sulfates acides, les éthers sulfates acides des mono alkyl éther de polyéthylène glycol, l'alkyl éther étant une chaîne hydrocarbonée de 1 à 8 atomes de carbone, les acides sulfamiques, les mono et diester phosphates de mono alkyl éther de polyéthylène glycol, les alkylène bis phosphoniques acides, les esters d'acides alkylène bis phosphonique, le naphtalène trisulfonique acide et l'acide sulfo benzoique, ou les anhydrides ou chlorures correspondants.

**2.** Composition selon la revendication 1, **caractérisée en ce que** l'acide est choisi parmi l'acide para toluène sulfonique, l'acide dodécyle benzène sulfonique, l'acide naphtalène sulfonique, l'acide xylène sulfonique, l'acide camphorsulfonique, l'acide méthane sulfonique, l'acide dodécane sulfonique, l'acide 3 sulfo propyl acrylate, l'acide 3 sulfo propyl méthacrylate, l'acide trifluorométhane sulfonique, l'acide perfluorobutane sulfonique, l'acide sulfophtalique, l'acide

perfluorooctane sulfonique, l'acide benzène sulfinique, l'acide para toluène sulfinique, le dibutyl phosphate acide, le di (2-éthylhexyl) phosphate acide, le didodécylphosphate acide, le di (néodécanoyl) phosphate acide, le monobutyl phosphate acide, le monostéaryl phosphate acide, le méthyl phosphonique acide, l'octyl phosphonique acide, l'hexadécaméthylène phosphonique acide, le 2 chloroéthylphosphonique acide, l'acide trifluoroacétique, l'acide hexafluoropropionique, le bis trifluorométhane sulfonimide, le triéthylsulfonylméthane, le dodécasulfate acide, le cyclohexylsulfamique acide, le butylsulfamique acide, le N,N-diméthylsulfamique acide, le méthylène bisphosphonique acide, le naphtalène trisulfonique acide et l'acide sulfo benzoique acide.

**3.** Composition selon l'une quelconque des revendications 1 ou 2, **caractérisée en ce que** moins de 50% en masse du tensioactif est sous forme liée.

**4.** Composition selon l'une quelconque des revendications 1 à 3, caractérisée en ce l'amine ou la polyamine est une amine de formule (IV) suivante :

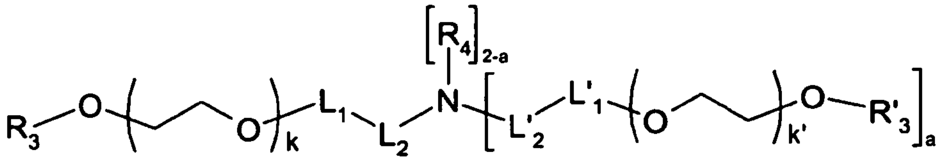

(IV)

dans laquelle :

- a est égal à 0, 1 ou 2 ;
- $R_4$ représente un atome d'hydrogène ou une chaîne hydrocarbonée, linéaire ou ramifiée, avantageusement choisie parmi les groupes alkyles, cycliques ou non, en $C_1$-$C_{20}$, ou parmi les groupes aryles comprenant de 6 à 30 atomes de carbone ; et lorsque a = 0, les groupes $R_4$ peuvent être identiques ou différents et le cas échéant peuvent former entre eux un cycle comprenant de 2 à 20 atomes de carbone ;
- $R_3$ et $R'_3$, identiques ou différents, représentent un atome d'hydrogène ou une chaîne hydrocarbonée, linéaire ou ramifiée ou (hétéro)cyclique éventuellement substituée, avantageusement choisie parmi les groupes alkyles en $C_1$-$C_{20}$, ou parmi les groupes aryles comprenant de 6 à 30 atomes de carbone ;
- k représente un nombre entier supérieur ou égal à 1 ;
- k' représente un nombre entier avantageusement compris de 0 à 60 ;
- $L_1$ et $L'_1$, identiques ou différents, représentent, indépendamment l'un de l'autre, un radical de formule $-[-L'-O-]_t-$, t représentant un nombre entier compris de 0 à 20, et L' représentant un radical alkylène, linéaire ou ramifié, comprenant de 3 à 10 atomes de carbone ;
- $L_2$ et $L'_2$, identiques ou différents, représentent, indépendamment l'un de l'autre, un radical bivalent alkylène, linéaire ou ramifié.

**5.** Composition selon l'une quelconque des revendications 1 à 3, **caractérisée en ce que** l'amine ou la polyamine est une polyamine de formule (V) suivante :

$$(R_4)_{(2-a)}\text{-}(D)_a\text{-}N\text{-}[L_2\text{-}L_1\text{-}(O\text{-}Z)_k\text{-}O\text{-}L'_1\text{-}L'_2\text{-}N(\text{-}D)]_g\text{-}L_2\text{-}L_1\text{-}(O\text{-}Z)_k\text{-}O\text{-}L'_1\text{-}L'_2\text{-}N\text{-}(D)_a\text{-}(R_4)_{(2-a)} \quad (V)$$

dans laquelle :

- D représente H ou $R_3$-$(O\text{-}Z)_k$-O-$L_1$-$L_2$- ou $R_4$,
- Z représente un résidu alkylène, éventuellement substitué, comprenant de 2 à 6 atomes de carbone,
- g représente un nombre entier compris de 0 à 5,
- a, k, $R_3$, $R_4$, $L_1$, $L_2$, $L'_1$ et $L'_2$ étant tels que définis ci-dessus pour la formule (IV).

**6.** Composition selon l'une quelconque des revendications 1 à 6, **caractérisée en ce que** l'amine ou la polyamine, est une amine de formule (A) suivante :

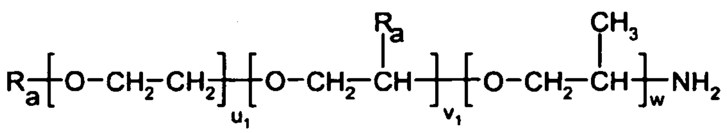

(A)

dans laquelle:

* $u_1$ représente un nombre entier, de préférence supérieur ou égal à 2,
* $v_1$ représente un nombre entier compris de 0 à 30,
* w représente un nombre entier compris de 1 à 30,
* $R_a$ représente un groupe alkyle comprenant de 1 à 20 atomes de carbone, tous les groupes $R_a$ pouvant être identiques ou différents.

**7.** Composition selon l'une des revendications 1 à 6, **caractérisée en ce que** le (poly)isocyanate est un (poly)isocyanate présentant une fonctionnalité moyenne en fonctions isocyanates au moins égale à 2 et au plus égale à 20.

**8.** Composition selon l'une quelconque des revendications 1 à 9, **caractérisée en ce que** le (poly)isocyanate est un (poly)isocyanate choisi parmi les produits d'homo- ou d'hétéro-condensation d'alcoylène-di-isocyanate, comportant des fonctions urée, uréthane, allophanate, ester, amide, acylurée, isocyanurate, oxadiazinetrione, immino-dimère, immino-trimère, immino-oxadiazinedione, diazétidinedione, et parmi les mélanges en contenant.

**9.** Composition selon l'une quelconque des revendications 1 à 8, **caractérisée en ce que** le rapport massique entre le système tensioactif et le (poly)isocyanate est compris entre 3 et 30%.

**10.** Composition selon l'une quelconque des revendications 1 à 9, **caractérisée en ce qu'**elle contient en outre un solvant, la quantité de solvant par rapport à la quantité du mélange formé par le système tensioactif et le (poly) isocyanate étant inférieure à 50% en poids, le solvant étant choisi dans le groupe constitué des esters, des éthers, des acétals, des carbonates cycliques ou linéaires, des lactones, des éthers de glycol ou de propylène glycol et des N-alkylamides.

**11.** Composition selon l'une quelconque des revendications 1 à 10, comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction SH, et le cas échéant au moins un solvant organique.

**12.** Composition selon la revendication 11, **caractérisée en ce que** le composé porteur d'au moins une fonction à hydrogène mobile est un polyol choisi parmi les polymères acryliques ou polyesters ou polyuréthanes.

**13.** Composition selon l'une quelconque des revendications 11 ou 12, **caractérisée en ce que** la masse moléculaire moyenne en nombre du composé porteur d'au moins une fonction à hydrogène mobile est compris de 100 à 100 000.

**14.** Composition selon l'une quelconque des revendications 11 à 13, comprenant :

- de 10 % à 60 % en poids de (poly)isocyanate, par rapport au poids total de la composition sans solvant, (% sur sec) ;
- de 0,25 % à 12 % en poids de tensioactif, par rapport au poids total de la composition sans solvant (% sur sec) ;
- de 30% à 80% en poids de composé porteur d'au moins une fonction à hydrogène mobile, par rapport au poids total de la composition sans solvant (% sur sec) ; et
- de 0% à 30% en poids de solvant organique, par rapport au poids total de la composition.

## Claims

**1.** Composition comprising:

- at least one (poly)isocyanate and
- at least one surfactant comprising:

(i) at least one acid (or a mixture of acids) and
(ii) at least one amine or polyamine carrying at least one alkylene oxide functional group,

the said acid being chosen from sulfonic acids, sulfinic acids, monoesters and diesters of alkyl phosphates, alkylphosphonic acids, monoesters of alkylphosphonic acids, perfluoroacetic acids, bistrifluoromethanesulfonimide, triethylsulfonylmethane, acid sulfates, acid ether-sulfates of polyethylene glycol monoalkyl ethers, the alkyl ether being a hydrocarbon chain having 1 to 8 carbon atoms, sulfamic acids, mono- and diester phosphates of polyethylene glycol monoalkyl ether, alkylene-bisphosphonic acids, esters of alkylene-bisphosphonic acids, naphthalenetrisulfonic acid and sulfobenzoic acid, or the corresponding anhydrides or chlorides.

**2.** Composition according to claim 1, **characterized in that** the acid is chosen from paratoluenesulfonic acid, dodecylbenzenesulfonic acid, naphthalenesulfonic acid, xylenesulfonic acid, camphorsulfonic acid, methanesulfonic acid, dodecanesulfonic acid, 3-sulfopropyl acrylate acid, 3-sulfopropyl methacrylate acid, trifluoromethanesulfonic acid, perfluorobutanesulfonic acid, sulfophthalic acid, perfluorooctanesulfonic acid, benzenesulfinic acid, paratoluenesulfinic acid, dibutyl acid phosphate, di-(2-ethylhexyl) acid phosphate, didodecyl acid phosphate, di-(neodecanoyl) acid phosphate, monobutyl acid phosphate, monostearyl acid phosphate, methylphosphonic acid, octylphosphonic acid, hexadecamethylene-phosphonic acid, 2-chloroethylphosphonic acid, trifluoroacetic acid, hexafluoropropionic acid, bistrifluoromethanesulfonimide, triethylsulfonylmethane, dodecasulfate acid, cyclohexylsulfamic acid, butylsulfamic acid, N,N-dimethylsulfamic acid, methylenebisphosphonic acid, naphthalenetrisulfonic acid and sulfobenzoic acid.

**3.** Composition according to any one of claims 1 or 2, **characterized in that** at least 50 % by weight of the surfactant is in bonded form.

**4.** Composition according to any one of claims 1 to 3, **characterized in that** the amine or the polyamine is an amine of the following formula (IV):

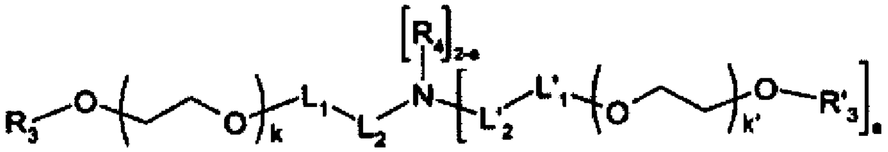

**(IV)**

in which:

- a is 0, 1 or 2;
- $R_4$ represents a hydrogen atom or a linear or branched hydrocarbon chain advantageously chosen from cyclic or non-cyclic $C_1$-$C_{20}$-alkyl groups, or from aryl groups comprising from 6 to 30 carbon atoms; and if a = 0, the groups $R_4$ can be identical or different and, where appropriate, can form between them a ring comprising from 2 to 20 carbon atoms;
- $R_3$ and $R'_3$ are identical or different and represent a hydrogen atom or a linear or branched or (hetero)cyclic, optionally substituted hydrocarbon chain, advantageously chosen from $C_1$-$C_{20}$-alkyl groups, or from aryl groups comprising from 6 to 30 carbon atoms;
- k represents an integer greater than or equal to 1;
- k' represents an integer advantageously from 0 to 60;
- $L_1$ and $L'_1$ are identical or different and independently of each other represent a radical of the formula $-[-L'-O-]_t-$, t representing an integer from 0 to 20 and L' representing a linear or branched alkylene radical comprising from 3 to 10 carbon atoms;
- $L_2$ and $L'_2$ are identical or different and independently of each other represent a linear or branched divalent alkylene radical

**5.** Composition according to any one of claims 1 to 3, **characterized in that** the amine or the polyamine is a polyamine of the following formula (V):

$$(R_4)_{(2-a)}\text{-}(D)_a\text{-}N\text{-}[L_2\text{-}L_1\text{-}(O\text{-}Z)_k\text{-}O\text{-}L'_1\text{-}L'_2\text{-}N(\text{-}D)]_g\text{-}L_2\text{-}L_1\text{-}(O\text{-}Z)_k\text{-}O\text{-}L'_1\text{-}L'_2\text{-}N\text{-}(D)_a\text{-}(R_4)_{(2-a)} \quad (V)$$

in which:

- D represents H or $R_3$-(O-Z)$_k$-O-$L_1$-$L_2$- or $R_4$,
- Z represents an optionally substituted alkylene radical comprising from 2 to 6 carbon atoms,
- g represents an integer from 0 to 5,
- a, k, $R_3$, $R_4$, $L_1$, $L_2$, $L'_1$ and $L'_2$ being as defined above for formula (IV).

**6.** Composition according to any one of claims 1 to 5, **characterized in that** the amine or the polyamine is an amine of the formula (A):

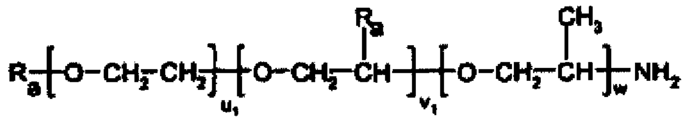

(A)

in which:

* $u_1$ represents an integer, preferably greater than or equal to 2,
* $v_1$ represents an integer from 0 to 30,
* w represents an integer from 1 to 30,
* $R_a$ represents an alkyl group comprising from 1 to 20 carbon atoms, it being possible for all the groups $R_a$ to be identical or different.

**7.** Composition according to any one of claims 1 to 6, **characterized in that** the (poly)isocyanate is a (poly)isocyanate having an average functionality of isocyanate functional groups of at least 2 and at most 20.

**8.** Composition according to any one of claims 1 to 7, **characterized in that** the (poly)isocyanate is a (poly)isocyanate chosen from the products of homo- or hetero-condensation of alkylene diisocyanate, comprising urea, urethane, allophanate, ester, amide, acylurea, isocyanurate, oxadiazinetrione, imino-dimer, imino-trimer, imino-oxadiazinedione, diazetidinedione functional groups, and from mixtures comprising these.

**9.** Composition according to any one of claims 1 to 8, **characterized in that** the weight ratio between the surfactant system and the (poly)isocyanate is between 3 and 30 %.

**10.** Composition according to any one of claims 1 to 9, **characterized in that** it also comprises a solvent, the amount of solvent, based on the amount of the mixture formed by the surfactant system and the (poly)isocyanate, being less than 50 % by weight, the solvent being chosen from the group consisting of esters, ethers, acetals, cyclic or linear carbonates, lactones, glycol or propylene glycol ethers, and N-alkylamides.

**11.** Composition according to any one of claims 1 to 10, also comprising at least one compound carrying at least one functional group having a mobile hydrogen chosen from primary or secondary hydroxyl, phenol, primary and/or secondary amine, carboxyl functional groups and an SH functional group and, where appropriate, at least one organic solvent.

**12.** Composition according to claim 11, **characterized in that** the compound carrying at least one functional group having a mobile hydrogen is a polyol chosen from acrylic polymers or polyesters or polyurethanes.

**13.** Composition according to any one of claims 11 or 12, **characterized in that** the number-average molecular weight of the compound carrying at least one functional group having a mobile hydrogen is from 100 to 100,000.

**14.** Composition according to any one of claims 11 to 13, comprising:

- from 10 % to 60 % by weight of (poly)isocyanate, based on the total weight of the composition without solvent (% dry weight);
- from 0.25 % to 12 % by weight of surfactant, based on the total weight of the composition without solvent (% dry weight);
- from 30 % to 80 % by weight of compound carrying at least one functional group having a mobile hydrogen, based on the total weight of the composition without solvent (% dry weight); and
- from 0 % to 30 % by weight of organic solvent, based on the total weight of the composition.

## Patentansprüche

1. Zusammenfassung, umfassend:

    - mindestens ein (Poly)isocyanat und
    - mindestens ein Tensid, umfassend:

        (i) mindestens eine Säure (oder eine Mischung von Säuren), und
        (ii) mindestens ein Amin oder Polyamin, das Träger von mindestens einer Alkylenoxidfunktion ist,

    wobei die Säure ausgewählt ist aus den Sulfonsäuren, Sulfinsäuren, Monoestern und Diestern der Alkylphosphate, Alkylphoshonsäuren, Monoestern der Alkylphosphonsäuren, Perfluoressigsäuren, dem Bistrifluormethansulfonimid, dem Triethylsulfonylmethan, den Sulfatsäuren, Ethersulfatsäuren der Monoalkylether des Polyethylenglykols, dem Alkylether, der eine Kohlenwasserstoffkette von 1 bis 8 Kohlenstoffatome hat, den Sulfamsäuren, Mono- und Diesterphosphaten des Monoalkylethers des Polyethylenglykols, Alkylenbisphosphonsäuren,
    den Estern der Alkylenbisphosphonsäuren, der Naphtalintrisulfonsäure und Sulfobenzoesäure oder den korrespondierenden Anhydriden oder
    Chloriden.

2. Zusammensetzung nach Anspruch 1, **dadurch gekennzeichnet, dass** die Säure ausgewählt ist aus p-Toluolsulfonsäure, Dodecylbenzolsulfonsäure, Naphtalinsulfonsäure, Xylolsulfonsäure, Camphersulfonsäure, Methansulfonsäure, Dodecansulfonsäure, 3-Sulfo-propylacrylatsäure, 3-Sulfopropylmethacrylatsäure, Trifluormethansulfonsäure, Perfluorbutansulfonsäure, Sulfophtalsäure, Perfluoroctansulfonsäure, Benzolsulfinsäure, p-Toluolsulfinsäure, Dibutylphosphatsäure, Di-(2-Ethylhexyl-)phosphatsäure, Didodecylphosphatsäure, Di-(Neodecanoyl-)phoshpatsäure, Monobutylphosphatsäure, Monostearylphosphatsäure, Methylphosphonsäure, Octylphosphonsäure, Hexadecamethylenphosphonsäure, 2-Chlorethylphosphonsäure, Trifluoressigsäure, Hexafluorpropionsäure, Bis-Trifluormethansulfonimid, Triethylsulfonylmethan, Dodecasulfatsäure, Cyclohexylsulfamsäure, Butylsulfamsäure, N,N-Dimethylsulfamsäure, Methylenbisphosphonsäure, Naphthalintrisulfonsäure und Sulfobenzoesäure.

3. Zusammensetzung nach einem beliebigen der Ansprüche 1 oder 2, **dadurch gekennzeichnet, dass** weniger als 50 Massen% des Tensids in gebundener Form ist.

4. Zusammensetzung nach einem beliebigen der Ansprüche 1 bis 3, **dadurch gekennzeichnet, dass** das Amin oder das Polyamin ein Amin der folgenden Formel (IV) ist:

    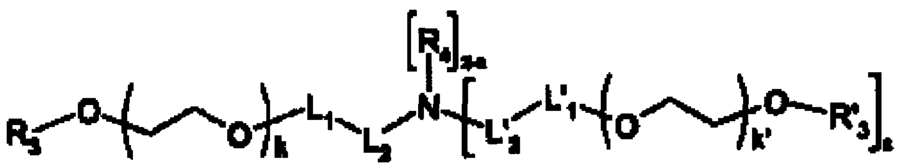
    (IV)

    in der:

    - a gleich 0, 1 oder 2 ist;
    - $R_4$ Wasserstoff oder eine Kohlenwasserstoffkette, linear oder verzweigt, vorteilhafterweise ausgewählt aus den zyklischen oder nichtzyklischen $C_1$ - $C_{20}$ Alkylgruppen, , oder aus den Arylgruppen, die 6 bis 30 Kohlenstoffatome umfassen; und wenn a = 0 ist, können die Gruppen $R_4$ identisch oder unterschiedlich sein und können gegebenenfalls unter sich einen Ring bilden, der 2 bis 20 Kunststoffatome umfasst;
    - $R_3$ und $R'_3$, identisch oder unterschiedlich, ein Wasserstoffatom oder eine Kohlenwasserstoffkette, linear oder verzweigt oder (hetero)zyklisch, gegebenenfalls substituiert, vorteilhafterweise ausgewählt aus den $C_1$ - $C_{20}$ Alkylgruppen oder aus den Arylgruppen, 6 bis 30 Kohlenstoffatome umfassen, darstellen;
    - k eine ganze Zahl größer oder gleich 1 darstellt;
    - k' eine ganze Zahl, vorteilhafterweise zwischen 0 und 60 darstellt;
    - $L_1$ und $L'_1$, identisch oder unterschiedlich, unabhängig voneinander ein Radikal der Formel $-[-L'-O-]_t-$, darstellen, wobei t eine ganze Zahl zwischen 0 und 20 ist und L' ein Alkylenradikal, linear oder verzweigt, 30 bis 10 Kohlenstoffatome umfassend, darstellt;
    - $L_2$ und $L'_2$, identisch oder unterschiedlich unabhängig voneinander ein bivalentes Alkylenradikal, linear oder

verzweigt, darstellen.

5. Zusammensetzung nach einem beliebigen der Ansprüche 1 bis 3, **dadurch gekennzeichnet, dass** das Amin oder das Polyamin ein Polyamin der folgenden Formel (V) ist:

$$(R_4)_{(2-a)}\text{-}(D)_a\text{-}N\text{-}[L_2\text{-}L_1\text{-}(O\text{-}Z)_k\text{-}O\text{-}L'_1\text{-}L'_2\text{-}N(\text{-}D)]_g\text{-}L_2\text{-}L_1\text{-}(O\text{-}Z)_k\text{-}O\text{-}L'_1\text{-}L'_2\text{-}N\text{-}(D)_a\text{-}(R_4)_{(2-a)} \quad (V)$$

in der:

- D ein H oder $R_3$-$(O\text{-}Z)_k$-O-$L_1$-$L_2$- oder $R_4$ darstellt,
- Z einen Alkylenrest, gegebenenfalls substituiert, darstellt, der 2 bis 6 Kohlenstoffatome umfasst,
- g eine ganze Zahl zwischen 0 und 5 darstellt,
- a, k, $R_3$, $R_4$, $L_1$, $L_2$, $L'_1$ und $L'_2$ sind die Größen, wie sie oben für die Formel (IV) definiert sind.

6. Zusammensetzung nach einem beliebigen der Ansprüche 1 bis 3, **dadurch gekennzeichnet, dass** das Amin oder das Polyamin ein Amin der folgenden Formel (A) ist:

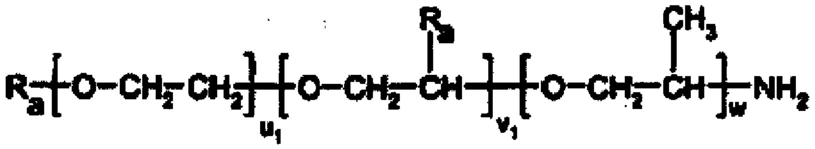

(A)

in der:

* $u_1$ eine ganze Zahl, vorzugsweise größer oder gleich 2, darstellt,
* $v_1$ eine ganze Zahl zwischen 0 und 30 darstellt, * w eine ganze Zahl zwischen 1 und 30 darstellt,
* $R_a$ eine Alkylgruppe darstellt, die 1 bis 20 Kohlenstoffatome umfasst, wobei alle Gruppen $R_a$ identisch oder unterschiedlich sein können.

7. Zusammensetzung nach einem beliebigen der Ansprüche 1 bis 6, **dadurch gekennzeichnet, dass** das (Poly) isocyanat ein (Poly)isocyanat ist, das eine durchschnittliche Funktionalität an Isocyanatfunktionen von mindestens gleich 2 und maximal gleich 20 aufweist.

8. Zusammensetzung nach einem beliebigen der Ansprüche 1 bis 9, **dadurch gekennzeichnet, dass** das (Poly) isocyanat ein (Poly)isocyanat ist, das aus den Produkten der Homo- oder Heterokondensation von Alcoylen-diisocyanat, die Harnstoff-, Urethan-, Allophanat-, Ester-, Amid-, Acylharnstoff-, Isocyanurat-, Oxadiazinetrion-, Imminodimer-, Imminotrimer-, Imminooxadiazinedion-, Diazetidinedion-Funktionen umfassen, und aus den diese enthaltene Mischungen, ausgewählt ist.

9. Zusammensetzung nach einem beliebigen der Ansprüche 1 bis 8, **dadurch gekennzeichnet, dass** das Massenverhältnis zwischen dem Tensidsystem und dem (Poly)isocyanat zwischen 3 und 30% liegt.

10. Zusammensetzung nach einem beliebigen der Ansprüche 1 bis 9, **dadurch gekennzeichnet, dass** sie außerdem ein Lösungsmittel enthält, wobei die Menge an Lösungsmittel in Bezug auf die Menge der Mischung, die durch das Tensidsystem und das (Poly)isocyanat gebildet wird, kleiner als 50 Gew.-% ist, wobei das Lösungsmittel aus der Gruppe gewählt ist, die aus Estern, Ethern, Acetalen, zyklischen oder linearen Carbonaten, Laktonen, Glykol- oder Propylenglykolethern und N-Alkylamiden gebildet wird.

11. Zusammensetzung nach einem beliebigen der Ansprüche 1 bis 10, die außerdem mindestens eine Verbindung enthält, die mindestens eine mobile Wasserstofffunktionalität trägt, ausgewählt aus einer primären oder sekundären Hydroxylfunktion, Phenolen, primären und/oder sekundären Aminen, Carboxylaten und einer SH-Funktion und gegebenenfalls mindestens ein organisches Lösungsmittel enthält.

12. Zusammensetzung nach Anspruch 11, **dadurch gekennzeichnet, dass** die Verbindung, die mindestens eine mobile Wasserstofffunktionalität trägt, ein Polyol ist, das aus den Acrylpolymeren oder Polyestern oder Polyurethanen ausgewählt ist.

**13.** Zusammensetzung nach einem beliebigen der Ansprüche 11 oder 12, **dadurch gekennzeichnet, dass** die Zahl der mittleren molekulare Masse der Verbindung, die mindestens eine mobile Wasserstofffunktionalität trägt, zwischen 100 und 100000 liegt.

**14.** Zusammensetzung nach einem beliebigen der Ansprüche 11 bis 13, umfassend:

- 10 bis 60 Gew.-% an (Poly)isocyanat in Bezug auf das Gesamtgewicht der Zusammensetzung ohne Lösungsmittel (Trockengew.-%);
- 0,25 bis 12 Gew.-% an Tensid in Bezug auf das Gesamtgewicht der Zusammensetzung ohne Lösungsmittel (Trockengew.-%);
- 30 bis 80 Gew.-% der Verbindung, die mindestens eine mobile Wasserstofffunktionalität trägt, in Bezug auf das Gesamtgewicht der Zusammensetzung ohne Lösungsmittel (Trockengew.-%); und
- 0 bis 30 Gew.-% organisches Lösungsmittel in Bezug auf das Gesamtgewicht der Zusammensetzung.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0222703 A1


### Littérature non-brevet citée dans la description


- The determination of ionization constants, a laboratory manual. Chapman and Hall Ltd
- **Z. WICKS.** *Prog. Org. Chem.,* 1975, vol. 3, 73
- *Prog. Org. Chem.,* 1989, vol. 9, 7
- **PETERSEN.** Justus Liebigs. *Annalen der Chemie,* 1949, vol. 562, 205
- **GOTTFRIED W. EHRENSTEIN ; FABIENNE MONTAGNE.** atériaux polymères, structure, propriétés et applications. Hermès Science, 2000
- **MICHAEL SZYCHER.** Handbook of Polyuréthanes. CRC press, 1999
- **D. STOYE ; W. FREITAG.** Resins for coatings, Chemistry, Properties and Applications. Hanser, 1996
- **BEN VAN LEEUWEN.** High solids hydroxy acrylics and tightly controled molecular weight. *le recueil de conférences de Eurocoat,* 1997, 505-515